# EUROPEAN PATENT APPLICATION

(11) **EP 4 262 196 A1**
(43) Date of publication of application: **18.10.2023**
(21) Application number: 23166942.5
(22) Date of filing: 06.04.2023
(51) Int. Cl.: H04N 7/18, G01C 21/26

(54) **IMAGE MAP GENERATING SYSTEMS AND METHODS**

(30) Priority: 12.04.2022 US 202263330204 P; 09.03.2023 US 202318181027
(71) Applicant: Transportation IP Holdings, LLC, Norwalk, CT 06851 (US)
(72) Inventor: Paul, Anthony D., Norwalk, 06851 (US); Karunaratne, Milan, Norwalk, 06851 (US)
(74) Representative: Laufhütte, Dieter

(57) **Abstract**

A method may include examining image deviation data of image tiles of a set that form a set view of a volume of space and determining whether the tiles are due for revision to update the tiles. The method may include scheduling a first vehicle (102) to capture updated image tiles and/or identifying a second vehicle (102) to capture the updated image tiles. A system (150) may include one or more processors (132) to examine image deviation data of image tiles of a set that form a set view of a volume of space and determine whether the one or more image tiles of the set are due for revision to update the view. The one or more processors (132) schedule a first vehicle (102) to move through or by the volume of space to capture one or more updated image tiles or identify a second vehicle (102) to capture the one or more updated image tiles.

## Description

### CROSS-REFERENCE TO RELATED APPLICATIONS

This application claims priority to U.S. Provisional Application No. 63/330,204 (filed 12-April-2022), the entire disclosure of which is incorporated herein by reference.

### BACKGROUND

### Technical Field.

The disclosed subject matter described herein relates to systems and methods for generating and refreshing three-dimensional (3D) map tiles of a transportation network and assets within the transportation network.

### Discussion of Art.

Transportation networks, for example rail freight networks, are increasing use of cameras and other vision systems. The cameras and visions systems may be mounted on moving assets like trains and collect information about both infrastructure and other moving objects, such as other assets or encounters with automobiles and people within the transportation network. Emerging technologies, such as virtual reality, allow for exploring physical areas that have been observed and mapped before, even if an active camera is not available in the area. Tools like virtual reality may be used for training vehicle operators and may become a proxy for decision-making, investigation, or auditing. However, virtual reality requires an underlying map to be created from recent visual information. It not always be possible to have an active camera in an area where a remote operator needs to gain visibility.

It may be desirable to have a system and method that differs from those that are currently available.

### BRIEF DESCRIPTION

In accordance with one aspect or example, a method may include examining image deviation data associated with one or more image tiles of a set of the image tiles used to form a larger set view of a volume of space and determining whether the one or more image tiles of the set are due for revision to update the larger set view of the volume of space based on the image deviation data that is examined. The method may include one or more of (a) scheduling a first vehicle to move through or by the volume of space with one or more sensors to capture one or more updated image tiles or (b) identifying a second vehicle that is moving through, by, or toward the volume of space with the one or more sensors to capture the one or more updated image tiles responsive to determining that the one or more image tiles of the set are due for revision.

In accordance with one aspect or example, a system may include one or more processors. The one or more processors may examine image deviation data associated with one or more image tiles of a set of the image tiles used to form a larger set view of a volume of space. The one or more processors may determine whether the one or more image tiles of the set are due for revision to update the larger set view of the volume of space based on the image deviation data that is examined. The one or more processors may (a) schedule a first vehicle to move through or by the volume of space with one or more sensors to capture one or more updated image tiles and/or (b) identify a second vehicle that is moving through, by, or toward the volume of space with the one or more sensors to capture the one or more updated image tiles responsive to determining that the one or more image tiles of the set are due for revision.

In accordance with one aspect or example, a system may include a controller. The controller may examine image deviation data associated with one or more image tiles of a set of the image tiles used to form a larger set view of a volume of space. The controller may determine whether the one or more image tiles of the set are due for revision to update the larger set view of the volume of space based on the image deviation data that is examined. The controller may direct a vehicle that is moving through, by, or toward the volume of space with one or more onboard sensors to capture partial data of the one or more updated image tiles responsive to determining that the one or more image tiles of the set are due for revision. The controller may examine the partial data to determine whether the partial data indicates that the one or more updated image tiles has changed. The controller may update a timestamp of the one or more updated image tiles responsive to determining that the one or more updated image tiles has not changed, or direct the one or more sensors to obtain additional data of an entirety of the one or more updated image tiles responsive to determining that the one or more updated image tiles has changed.

### BRIEF DESCRIPTION OF THE DRAWINGS

The subject matter may be understood from reading the following description of non-limiting embodiments, with reference to the attached drawings, wherein below:
Figure 1 illustrates one example of a vehicle system;
Figure 2 illustrates one example of a map generation system;
Figure 3 schematically illustrates a method according to one embodiment;
Figure 4 schematically illustrates a method according to one embodiment;
Figure 5 schematically illustrates a method according to one embodiment;
Figure 6 schematically illustrates a method according to one embodiment; and
Figure 7 schematically illustrates a method according to one embodiment.

### DETAILED DESCRIPTION

Embodiments of the subject matter described herein relate to creation and/or updating of a virtual reality map of a transportation network and assets, including vehicle systems, within the transportation network. A tile map of the transportation network may be generated from image data collected by vehicle systems operating within the transportation network. The tile map may be a three-dimensional (3D) or two dimensional (2D) map formed from several images (2D or 3D images). The tile map may be formed and/or created from the image data that is collected. The tile map may be used in a virtual reality environment to, for example, train operators of vehicle systems operating within the transportation network, identify sections of the transportation network requiring repair, replacement, or closer inspection (e.g., routes, tunnels, bridges, wayside devices, switches, gates, light signals, signs, etc.). The maps and virtual reality environment may be used to make decisions regarding traffic routing within the transportation network, conduct investigations (for example into incidents including accidents involving vehicle systems), conduct audits of vehicle system operation within the transportation network, and the like.

The maps may be maintained and updated to provide the maps and the virtual reality environment with recent information that represents the transportation network. The visual or image tiles may be updated and timestamped to create a representation of the latest or more recent information from the transportation network. For example, a virtual reality map of a route corridor would be created by a first vehicle system having one or more cameras recording and mapping the transportation route or corridor as a 3D rendering with photographic tiles for each part of the corridor that is observed by the cameras. Each visual tile may be associated with with a date and/or timestamp indicating the date and/or time represented by the image associated with the tile. Afterward, the map may be made available to a virtual reality tour. When another asset or vehicle system passes through the transportation route or corridor in the same or opposite direction, or on another route, the vantage point of this other asset or vehicle may be different and the other asset or vehicle may obtain new images or tiles, which may be used to fill in gaps between images or tiles from the prior vehicle or asset, to update images or tiles from the prior vehicle, or the like. The second vehicle also may refresh (e.g., obtain updated images of) any existing tiles and replace the existing tiles with updated imagery. In a later audit, the map of the transportation route or corridor may be identified as out of date (e.g., the most recently obtained image or the average age of the images forming the tiles is older than a designated age) or have specific parts or tiles needing a refresh. If a single or multi-vehicle system is scheduled to pass through the corridor, this vehicle may be directed to collect images of part of the transportation route or corridor. Otherwise, a vehicle system may be dispatched to the transportation route or corridor for collection of the images. These images may be used to replace or update the map of the corridor. Over time, an entire transportation network, for example a freight, transit, rail, road, mining, or highway network, may be mapped using images obtained by several vehicles or vehicle systems. The map may be made available as a service to software applications and use cases where remotely observing expansive and complex infrastructures and network representations may be necessary.

The frequency with which the map of the transportation network may be updated or refreshed may depend on several factors, including the number of vehicle systems within the transportation network that are available to capture or collect image data, the availability of memory for storing image data onboard vehicle systems within the transportation network, and/or the availability of processing capacity of the system for generating, maintaining, and updating the map. The time between updates of the image data may be determined to maintain the accuracy of the map so that it represents the most current state or condition of the transportation route(s) or corridor(s) within the transportation network. Image data that is captured or collected may also be analyzed to determine whether the captured or collected image data is sufficiently different from the image data of the map to require an update or refresh.

A prioritization model may be established to help ensure the virtual reality map is accurate without requiring the entire map to be refreshed in real time. This prioritization model may be used to determine which tiles to update before others. A prioritization of a map refreshing process may include all tiles are to be refreshed within a specified period of time (for example, monthly). Upon a tile refresh, the tile may be compared to a previous version of the same tile, and a difference calculation can be determined. If the difference between the images is below a threshold, then the time before the same tile is refreshed or updated again may be lengthened. If the difference between the tiles exceeds the threshold, then the time before the same tile is refreshed or updated again may be shortened to update the tile more often.

Within the map, the prioritization model may also recognize specific objects. For example, a vehicle such as a railcar on a route may appear in the images and may be stored as a type of railcar and also an instantiation of that railcar. A gondola may be recognized as a railcar type with an underlying 3D model. A specific gondola railcar observed may have its own 3D record for each time the vehicle is observed from different angles. A moving camera may be able to recognize the obstruction (e.g., the railcar) within the environment as a known object and would not recreate that portion of the ground topology, mischaracterizing the railcar as infrastructure changes. For example, if the map previously was created with images in which this railcar does not appear, then the subsequently obtained images used to update the map may show the railcar. Because the railcar may be identified using data models that inform the system of how the railcar will appear in images, the system can discern between the railcar and static infrastructure that is not mobile. The system may update the tile map with the information in the new images but that does not include the railcar itself (to avoid the railcar being identified by the system as a change in the static infrastructure shown in the map). The railcar itself may be accurately represented in the images, even if a camera has never observed the railcar within its current placement. For example, if a dispatching system shows a specific railcar in a specific location, virtual reality could render the tiled model of that specific railcar, including with details such as damage and/or graffiti, in its current position and allow virtually walking around the railcar to observe each side of the railcar.

While one or more embodiments are described in connection with a rail vehicle system, not all embodiments relate to rail vehicle systems. Further, embodiments described herein extend to multiple types of vehicle systems. Suitable vehicle systems may include a rail vehicle, automobile, truck (with or without trailers), bus, marine vessel, aircraft, mining vehicle, agricultural vehicle, and off-highway vehicle. Suitable vehicle systems described herein can be formed from a single vehicle. In other embodiments, the vehicle system may include multiple vehicles that move in a coordinated fashion. With respect to multi-vehicle systems, the vehicles can be mechanically coupled with each other (e.g., by couplers), or they may be virtually or logically coupled but not mechanically coupled. For example, vehicles may be communicatively but not mechanically coupled when the separate vehicles communicate with each other to coordinate movements of the vehicles with each other so that the vehicles travel together (e.g., as a convoy, platoon, swarm, fleet, and the like). A suitable vehicle system may be a rail vehicle system that travels on tracks, or a vehicle system that travels on roads or paths.

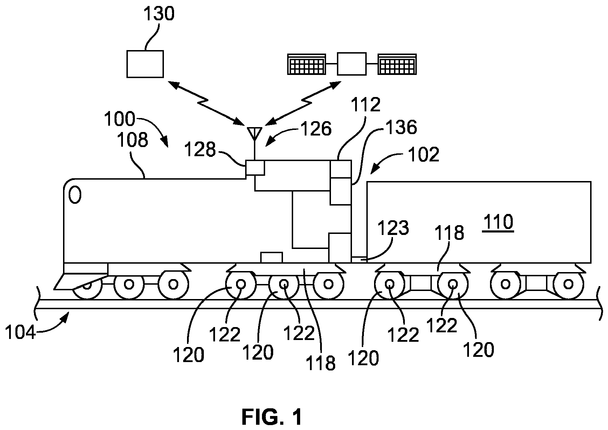

Referring to Figure 1, an image data capture and communication system 100 (also referred to as an image map generating system) may be disposed on a vehicle system 102. The vehicle system may travel along a route 104 on a trip from a starting or departure location to a destination or arrival location. The route may be a road (e.g., multi-lane highway or other road), track, rail, air space, waterway, etc. The vehicle system may include a propulsion-generating vehicle 108 and optionally one or more non-propulsion-generating vehicles 110 that are interconnected to one another to travel together along the route. The vehicle system may include at least one propulsion-generating vehicle and, optionally, one or more non-propulsion-generatingvehicles.

The propulsion-generating vehicle(s) may generate tractive efforts to propel (for example, pull or push) the non-propulsion-generating vehicle(s) along the route. The propulsion-generating vehicle includes a propulsion subsystem 118 to drive axles 122 connected to wheels 120. According to one embodiment, the propulsion system includes one or more traction motors that generate tractive effort to propel the vehicle system. According to one embodiment, one of the propulsion vehicles may be a lead vehicle in a multi-vehicle system, where other vehicles are remote vehicles of the multi-vehicle system. The remote vehicles may be propulsion-generating vehicles or non-propulsion generating vehicles.

The vehicles in the vehicle system may be mechanically coupled with each other. For example, the propulsion-generating vehicle may be mechanically coupled to the non-propulsion-generating vehicle by a coupler 123. Alternatively, the vehicles in a vehicle system may not be mechanically coupled with each other but may be logically coupled with each other. For example, the vehicles may be logically coupled with each other by the vehicles communicating with each other to coordinate the movements of the vehicles with each other so that the vehicles travel together in a convoy or group as the vehicle system.

According to one embodiment, the vehicle system may be a rail vehicle system, and the route may be a track formed by one or more rails. The propulsion-generating vehiclemay be a locomotive, and the non-propulsion-generating vehicle may be a rail car that carries passengers and/or cargo. Alternatively, the propulsion-generating vehicle may be another type of rail vehicle other than a locomotive. According to other embodiments, the vehicle system may be one or more automobiles, marine vessels, aircraft, mining vehicles, agricultural vehicles, or other off- highway vehicles (OHV) system (e.g., a vehicle system that is not legally permitted and/ordesigned for travel on public roadways), or the like. While some examples provided herein describe the route as being a track, not all embodiments are limited to a rail vehicle traveling on a railroad track. One or more embodiments may be used in connection with non-rail vehicles and routes other than tracks, such as roads, paths, waterways, or the like.

The image data collection and communication system may include a visual sensor(s) 112 that may capture or collect data as the vehicle system travels along the route. According to one embodiment, the visual sensor may be an imaging device. For example, the visual sensor may be a camera that may capture or collect still images, a video camera that may capture or collect video images, an infrared camera, a high-resolution camera, radar, sonar, or lidar. The visual sensor may be positioned to obtain image data associated with the route. The image data may include images of the route. The image data may include images of areas surrounding the route. According to one embodiment, the vehicle system may be a rail vehicle and the image data may include images of the tracks that the rail vehicle travels on. According to one embodiment, the vehicle system may be a vehicle system that travels on roads and the image data may include images of the roads. According to one embodiment, the vehicle system is an off-road vehicle system and the image data may include images of the off-road vehicle system route.

According to one embodiment, the image data collection and communication system may be disposed entirely on one vehicle of the vehicle system, for example on one propulsion-generating vehicle. According to one embodiment, one or more components of the image data collection and communication system may be distributed among vehicles of the vehicle system. For example, some components maybe distributed among two or more propulsion-generating vehicles that are coupled together in a group or consist.

According to one embodiment, at least some of the components of the map data collection and communication system may be located remotely from the vehicle system, such as at a dispatch location or a back-office location. The remote components of the image data collection and communication system may communicate with the vehicle system and with components of the map data collection and communication system disposed on the vehicle system.

The image data may include images of the areas surrounding the travel route. For example, the image data may include a panoramic view (e.g., a 360° view) of the areas surrounding the travel route. The image data may include images of areas within a specified viewing angle of the visual sensor(s). The image data may include images of one or more of topography (e.g., hills, bodies of water, etc.), vegetation, buildings, traffic signals, and/or other vehicles on the travel route. The image data collection and communication system may include a communication system 126 that includes a vehicle communication assembly 128 and a remote communication assembly 130. The vehicle communication assembly may be on-board a lead vehicle, for example a lead propulsion-generating vehicle. The remote communication assembly may be at a location remotefrom the vehicle system, such as at a dispatch or a back-office location. The vehicle communication assembly may communicate with the remote communication assembly wirelessly.

The vehicle system may have a controller 136, or control unit, that maybe a hardware and/or software system which operates to perform one or more functions for the vehicle system. The controller receives information from components of the image data collection and communication system such as the visual sensor(s), analyzes the received information, and generates communication signals. A location determining system 106 may determine a location of the vehicle system along the route. According to one embodiment, the location determining system may be a Global Positioning System (GPS). The vehicle communication assembly may communicate the location of the vehicle system to the remote communication assembly.

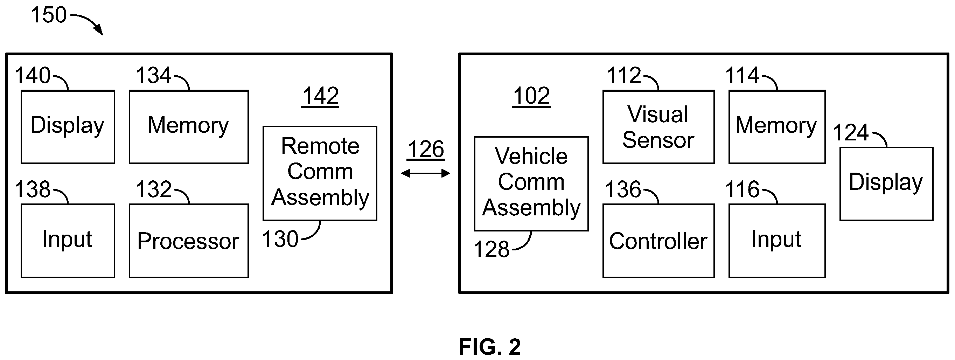

Referring to Figure 2, a map generation system 150 may include the communication system, the vehicle communication assembly, the vehicle controller, the visual sensor(s), and the remote communication assembly. The map generation system may include a memory 114, an input 116, and a display 124 onboard the vehicle system. The map generation system may include a processor(s) 132, a memory 134, an input 138, and a display 140 at a remote location 142 that includes the remote communication assembly. The remote location may be, for example, a dispatch or a back-office location. The remote location may include or be in communication with a cloud computing service. The memory onboard the vehicle system may include instructions that are executable by the controller onboard the vehicle system that implements or operates with the processor(s) of the remote location to implement methods disclosed herein. The memory of the remote location may include instructions that are executable by the processor(s) that implements or operates with the controller onboard the vehicle system to implement methods disclosed herein.

The memory onboard the vehicle system may store data collected by the visual sensor(s). The memory onboard the vehicle may also store a map of the route that was generated prior to the start of the trip. The map may be stored in the memory of the remote location. The map may be formed of a plurality of image tiles. The image tiles may include image data collected by the visual sensor(s) of the vehicle system and other vehicle systems that have that have traveled on the route the vehicle system is traveling and that captured image data while traveling the route. The image tiles may include image data collected by the vehicle system or other vehicle systems that have traveled other routes that include points or areas that the routes have in common.

As vehicle systems operate in a transportation network the visual sensors onboard the vehicle systems capture or collect image data of the transportation network while traveling along routes within the transportation network. A set of image tiles is formed from the image data that is collected. Each image tile may be created using a combination or variety of image data from multiple visuals sensors. For example, each image tile may be created from image data from a camera, a video camera, radar, LiDAR, sonar, infrared, and/or other visual sensor.

A plurality of image tiles may be grouped together to form a set of image tiles. The plurality of image tiles may be stitched together to form a tile map. According to one embodiment, the tile map may be a 3D tile map. The area represented by the 3D tile map is a volume of space within the transportation network. The set includes all of the images that are combined to form the tile map. A larger set view includes the 3D tile map. The larger set view may also include a 2D view that is formed from two mor more images. For example, the larger set view of the image tiles may include two or more images, video frames, or data output from the visual sensor(s) that are stitched together to form the larger set view of the volume of space.

The image tiles may include metadata that includes information including a time and date that the image data for the image tile was captured or collected. The metadata may include position data that indicates a position at which the image data was captured or collected. The position data may be obtained from, for example, the location determination system. The metadata may include a series count of collections of image data for the image tile in which the image data is confirmed to be unchanged. The metadata may include a period of time count of collections in which the image data is confirmed to be unchanged. For example, the metadata may include data that the image data for the image tile has not changed for one year. Each tile may include metadata of when a collection of image data last deviated from previous collections of image data for the tile and the number of collections and the amount of time passed between the deviation and the most recent collection of image data. The metadata may then be used to calculate the frequency of change for a specific image tile to decide when the specific image tile will be scheduled for the next collection of image data.

If an image tile is not scheduled to be collected, a vehicle system passing the area the image tile represents may be assigned a list of tiles that may be the oldest tiles since the last collection or that may be known to change often based on previous collections and comparisons. When the visual sensor of the vehicle system is capturing or collecting the image data of the list of tiles, the visual sensor may not collect image data for the entire image tile. The visual sensor may sample smaller portions of the image tile to confirm or deny the image tile is the same as in previous collections of image data. If the smaller sampled portion is the same, the time stamp of the image file may be updated. If the smaller sampled portion is different, the visual sensor may then immediately collect the image data for the entire image tile for comparison.

If the image tile formed from the collected image data is significantly different from expected, the map may be revised and the image tile may be flagged for further collection for a period of time until the image tile is again considered to be stable and unchanging. The image capture or collection may be done by other passing vehicle systems in the transportation network. The collection of further image data to confirm the image tile as stable and unchanging prevents an image tile from being permanently revised for a temporary condition, for example due to accumulation of leaves or snow on the route.

The metadata may include an optimal minimum sample size. A machine learning (ML) model may be used to optimize a lowest number of image tile variations needed for useful comparison of a single tile. For example, in an environment with minimal lighting and weather variation, a single tile may be used for comparison purposes for a year. According to another example, in environments with significant lighting and weather differences two or three image tiles may be required for comparison purposes. The machine learning model may detect which of the image tile variations matches before reporting a difference between image tiles. The best tile match may be logged or recorded with contextual metadata including, for example, the time of day, the season, and a measure of the lighting. The machine learning model may be used to compare image tiles in priority order by the contextual metadata. The comparison may be stopped after the first match. The machine learning model may then again determine the optimum minimum sample size. The machine learning model may create and store as few variations as possible to allow for single match comparison year-round while monitoring seasonal and time of day drift patterns.

Each vehicle system may have a priority level for collecting or capturing image data. A vehicle system may have a low priority which may include having no assigned image data collection or capture. The visual sensor of the vehicle system may be used to perform rolling, passive spot checks. The image data captured or collected may not be a full collection for an image tile, but may be smaller samples of scattered image tiles.

A vehicle system may have a medium priority for image data capture or collection. The vehicle system may be tasked with specific image tiles in a list for scheduled collection and/or confirmation as unchanged from the most recent image data. The visual sensor may perform partial or full collection of the image data for each image tile in the list. The specific tiles may be dictated as a worklist to the vehicle system. The list may be different from just-in-time collections, but may rely on current priority levels. The priority level may include oldest tiles being checked or updated, along with business and/or context rules dictating modifiers to priority level in areas where uncommon but high-risk changes exist. For example, the vehicle system priority may be changed or updated if the vehicle system is operating in an area where washouts or mudslides are known to occur. Similar to speed restrictions for the vehicle system, business and/or context rules may be permanent or transitory. For example, the business and/or context rules can be permanent or transient, such as seasonal rules for modifying priority level due to, for example, snow, or temporary, for example due to a one-time event, such as during or following a hurricane.

A vehicle system may have a high priority for data capture or collection. The vehicle system may be requested to confirm or deny a previous observance, such as a mismatch. The visual sensor may do a partial or full collection on one or more image tiles and report what the change is or submit a full collection for processing at the remote location or cloud, or for a human review. The vehicle system may perform an onboard analysis of the change, for example using an edge device.

A vehicle system may operate according to different priority levels while in the transportation network. The vehicle system may operate according to a high priority level and at the same time perform according to the medium and low priority levels. The priority level of the vehicle system may change while operating in the transportation network. For example, the vehicle system may be operating according to the low priority level but receive a communication or transmission from the remote location to operate in the medium and/or high priority level. The controller of the vehicle system may determine the capability of the visuals sensor to perform according to each priority level. The controller of the vehicle system may determine its resource capacity for operating according to each priority level, in terms of, for example, its hours in service, the availability or capability of the visual sensor to perform image data capture or collection in addition to the requirements of the visual sensor for other vehicle system operation, a data storage capacity onboard the vehicle system, and/or communication availability with the remote location and/or cloud.

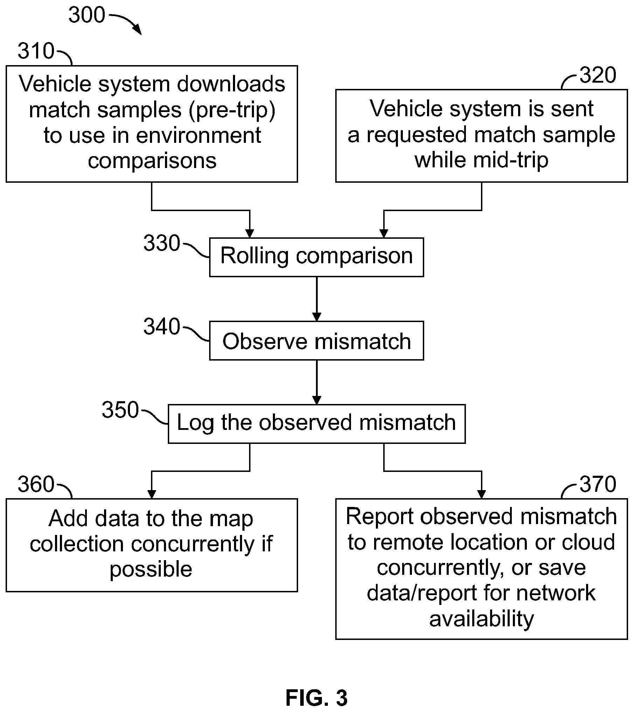

Referring to Figure 3, a method 300 according to one embodiment includes a step 310 of a vehicle system, prior to beginning a trip, downloading match samples to use in environment comparisons. The vehicle system may download the match samples of image tiles to an edge device onboard the vehicle system. The edge device may include hardware that connects the vehicle system to the remote communication assembly of the remote location or a cloud storage system. The method may include a step 320 of transmitting or communicating match samples of image tiles for comparison to the vehicle system while the vehicle system is on a trip within the transportation network.

The method may include a step 330 of a rolling comparison of the match samples of the image tiles to image data captured or collected during the trip. While the vehicle system is traveling a route within the transportation network the image data that is captured or collected is formed into image tiles. The image tiles may be compared to the match samples of the image tiles that were downloaded prior to the trip and/or to the match samples of the image tiles that were transmitted or communicated to the vehicle system during the trip. The method may include a step 340 of observing a mismatch between one or more of the match samples of image tiles and one or more image tiles formed from image data captured or collected during the trip. The method may include a step 350 of logging or recording or storing the observed mismatch(es). The observed mismatch(es) may be stored in the memory onboard the vehicle system, the memory of the remote location, and/or in a cloud.

The method may include a step of 360 of adding the data to the map collection concurrently with the recording or logging of the observed mismatch, if adding the data concurrently is possible. The method may include a step 370 of reporting the observed mismatch to a cloud currently with recording or logging the observed mismatch if the reporting is possible. If reporting the observed mismatch is not possible, the method may include saving the image data and the observed mismatch and the report until the system is able to connect to the remote location, for example through a network.

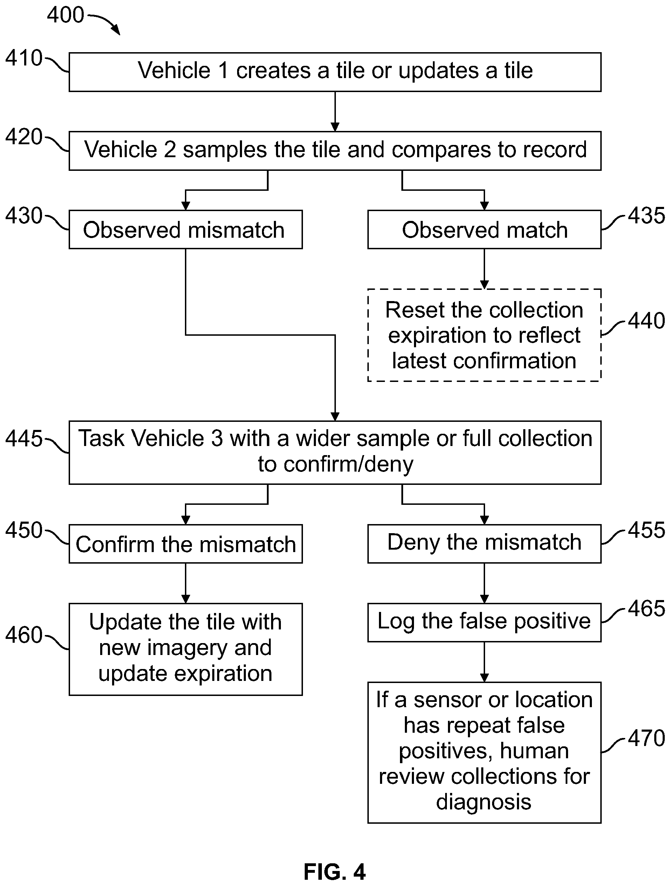

Referring to Figure 4, a method 400 may include a step 410 of creating or updating an image tile by a first vehicle (Vehicle 1). The method may include a step 420 of a second vehicle (Vehicle 2) sampling the image tile and comparing the image tile to a record of the image tile in the map. The method may include a step 430 of observing a mismatch between the sampled image tile and the record of the image tile in the map. The method may include a step 435 of observing a match of the sampled image tile with the record of the image tile in the map. The method may include a step 440 of resetting a collection expiration to reflect the observed match, i.e., confirming the latest sample of the image tile matches the record of the image tile in the map collection.

The method may include a step 445 of tasking a third vehicle (Vehicle 3) with collecting a wider sample of the image tile or collecting a full sample of the image tile to confirm or deny the observed mismatch. The method may include a step 450 of confirming the observed mismatch from the wider or full sample by the third vehicle and a step 460 of updating the image tile with the new image data and a new expiration.

The method may include a step 455 of denying the observed mismatch if the wider or full sample of the image tile by the third vehicle. The observed mismatch may be denied when the wider or full sample by the third vehicle is the same observed mismatch by the second vehicle. The method may include a step 465 of logging or reporting the false positive (the observed mismatch by the second vehicle). The method may include a step 470 of conducting a review of the image data collections for diagnosis of false positives if a visual sensor or location has repeat false positive observed mismatches.

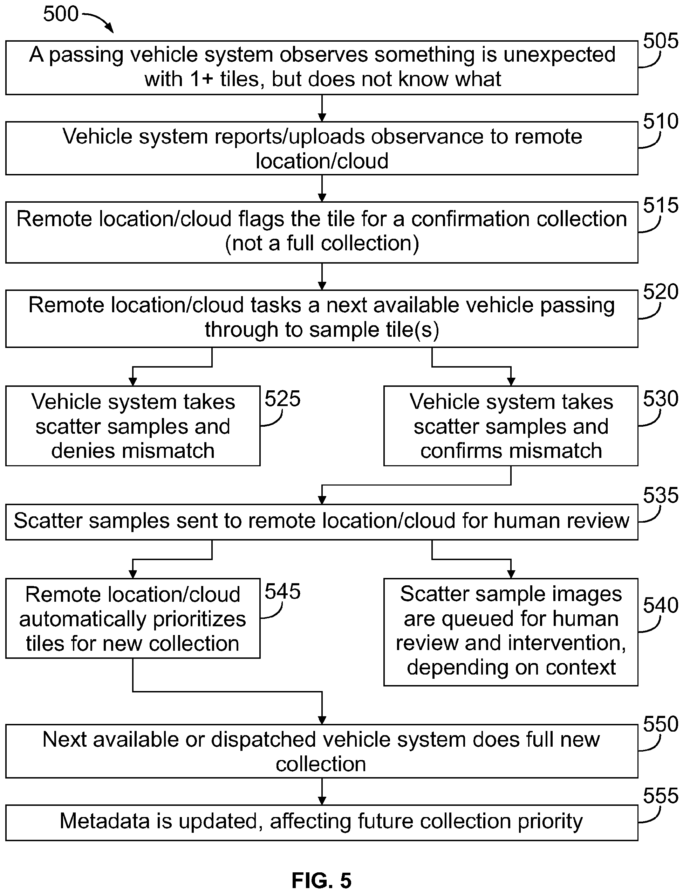

Referring to Figure 5, a method 500 may include a step 505 of observing unexpected image data for one or more image tiles with a visual sensor of a passing vehicle system. The visual sensor may not be able to determine what the unexpected image data is. The method includes a step 510 of the vehicle system reporting or uploading the observed unexpected image data to the remote location or cloud. The method includes a step 515 of the remote location or cloud flagging the image tile for confirmation by a collection of additional image data. According to one embodiment, the collection of additional image data may not be a full collection of the tile image data.

The method may include a step 520 of the remote location or cloud tasking a next available vehicle system passing through the area to sample the image data of the image tile. The method may include a step 525 of the vehicle system taking a scatter sample of the image tile and denying the mismatch (i.e., determining that the image tile matches the image tile of the map collection). The step may include a step 530 of the vehicle system taking a scatter sample of the image tile and confirming the mismatch (i.e., determining that the image tile does not match the image tile of the map collection).

The method may include a step 535 of the sending the scatter samples to the remote location or cloud for human review and a step 540 of queueing the scatter sample images for human review and intervention depending on the context. The method may include a step 545 of the remote location or cloud automatically prioritizing image tiles for full new image data collections and a step 550 of the next available vehicle system performing a new collection of image data for the image tiles. The method may include a step 55 of updating the metadata of the image tiles. The updated metadata may affect future image data collection priority.

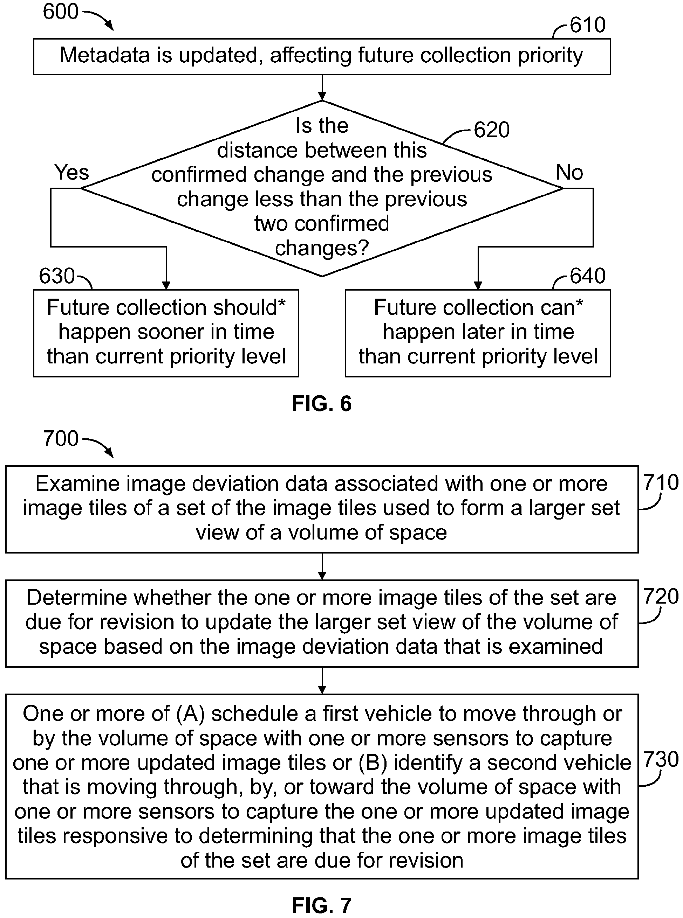

Referring to Figure 6, a method 600 may include a step 610 of updating metadata of an image tile. The method may include a step 620 of determining if a time between a confirmed change to the image tile and a previous confirmed change to the image tile is less than the time between the two previous confirmed changes. The method may include a step 630 of collecting image data for the image tile sooner in time than a current priority level if the time between the confirmed change is less than the time between the two previous confirmed changes (S620: Yes). The method may include a step 640 of collecting image data for the image tile later in time than the current priority level if the time between the confirmed change is more than the time between the two previous confirmed changes (S620: No).

Referring to Figure 7, a method 700 includes a step 710 of examining image deviation data associated with one or more image tiles of a set of the image tiles used to form a larger set view of a volume of space. The method may include a step 720 of determining whether the one or more image tiles of the set are due for revision to update the larger set view of the volume of space based on the image deviation data that is examined. The method may include a step 730 of one or more of (a) scheduling a first vehicle to move through or by the volume of space with one or more sensors to capture one or more updated image tiles or (b) identifying a second vehicle that is moving through, by, or toward the volume of space with the one or more sensors to capture the one or more updated image tiles responsive to determining that the one or more image tiles of the set are due for revision.

A method may include examining image deviation data associated with one or more image tiles of a set of the image tiles used to form a larger set view of a volume of space and determining whether the one or more image tiles of the set are due for revision to update the larger set view of the volume of space based on the image deviation data that is examined. The method may include one or more of (a) scheduling a first vehicle to move through or by the volume of space with one or more sensors to capture one or more updated image tiles or (b) identifying a second vehicle that is moving through, by, or toward the volume of space with the one or more sensors to capture the one or more updated image tiles responsive to determining that the one or more image tiles of the set are due for revision.

The image deviation data may include a difference between image data of a first image tile of the one or more image tiles and image data of a second image tile of the one or more image tiles.

The image deviation data may include a time difference between a first time at which a first image tile of the one or more image tiles was obtained and image data of a second image tile of the one or more image tiles was obtained.

At least one of the one or more image tiles in the set may be a combination of different sensor outputs.

The larger set view of the image tiles may include two or more images, video frames, or data output from an optical sensor that are stitched together to form the larger set view of the volume of space.

The larger set view of the image tiles may include a three-dimensional image of the volume of space.

Determining whether the one or more image tiles of the set are due for revision may include determining whether a data content of a previously obtained image tile of the one or more image tiles differs from a data content of a more recently obtained image tile by more than a threshold content amount.

Determining whether the one or more image tiles of the set are due for revision may include determining whether a time period between (c) an earlier time when a data content of a previously obtained image tile of the one or more image tiles was obtained and (d) a later time when a data content of a more recently obtained image tile was obtained is longer than a threshold time period.

The one or more of (a) scheduling the first vehicle or (b) identifying the second vehicle may include directing the first vehicle or the second vehicle to use an onboard sensor to sense data for updating at least one of the image tiles that is older than one or more others of the image tiles or that is associated with an increased frequency of prior changes.

The one or more of (a) scheduling the first vehicle or (b) identifying the second vehicle may include directing the first vehicle or the second vehicle to use an onboard sensor of the one or more sensors to sense partial data of a sampled part, but not all, of at least one of the image tiles. The method may include examining the partial data of the at least one of the image tiles that is sensed by the onboard sensor to determine whether the partial data of the at least one of the image tiles indicates that the at least one of the image tiles has changed.

The method may include updating a timestamp of the at least one of the image tiles associated with the partial data responsive to determining that the at least one of the image tiles has not changed or directing the onboard sensor to obtain additional data of an entirety of the at least one of the image tiles responsive to determining that the at least one of the image tiles has changed.

The method may include one or more of (c) scheduling a third vehicle to move through or by the volume of space with the one or more sensors to capture the one or more updated image tiles or (d) identifying a fourth vehicle that is moving through, by, or toward the volume of space with the one or more sensors to capture the one or more updated image tiles responsive to determining that the at least one of the image tiles has changed by more than a threshold amount.

The method may include communicating the set of the image tiles to at least a third vehicle for the at least the third vehicle to control or change movement of the at least the third vehicle while the at least the third vehicle is moving through the volume of space.

A system may include one or more processors. The one or more processors may examine image deviation data associated with one or more image tiles of a set of the image tiles used to form a larger set view of a volume of space. The one or more processors may determine whether the one or more image tiles of the set are due for revision to update the larger set view of the volume of space based on the image deviation data that is examined. The one or more processors may one or more of (a) schedule a first vehicle to move through or by the volume of space with one or more sensors to capture one or more updated image tiles or (b) identify a second vehicle that is moving through, by, or toward the volume of space with the one or more sensors to capture the one or more updated image tiles responsive to determining that the one or more image tiles of the set are due for revision.

The image deviation data may include one or more of a difference between image data of a first image tile of the one or more image tiles and image data of a second image tile of the one or more image tiles or a time difference between a first time at which a first image tile of the one or more image tiles was obtained and image data of a second image tile of the one or more image tiles was obtained.

The larger set view of the image tiles may include a three-dimensional image of the volume of space.

Determining whether the one or more image tiles of the set are due for revision may include determining whether a data content of a previously obtained image tile of the one or more image tiles differs from a data content of a more recently obtained image tile by more than a threshold content amount.

A system may include a controller. The controller may examine image deviation data associated with one or more image tiles of a set of the image tiles used to form a larger set view of a volume of space. The controller may determine whether the one or more image tiles of the set are due for revision to update the larger set view of the volume of space based on the image deviation data that is examined. The controller may direct a vehicle that is moving through, by, or toward the volume of space with one or more onboard sensors to capture partial data of the one or more updated image tiles responsive to determining that the one or more image tiles of the set are due for revision. The controller may examine the partial data to determine whether the partial data indicates that the one or more updated image tiles has changed. The controller may update a timestamp of the one or more updated image tiles responsive to determining that the one or more updated image tiles has not changed or direct the one or more sensors to obtain additional data of an entirety of the one or more updated image tiles responsive to determining that the one or more updated image tiles has changed.

The vehicle may be a first vehicle, and the controller may one or more of schedule a second vehicle to move through or by the volume of space with the one or more sensors to capture the one or more updated image tiles or identify a third vehicle that is moving through, by, or toward the volume of space with the one or more sensors to capture the one or more updated image tiles responsive to determining that the one or more image tiles has changed by more than a threshold amount.

The vehicle may be a first vehicle, and the controller may communicate the set of the image tiles to at least a second vehicle for the at least the second vehicle to control or change movement of the at least the second vehicle while the at least the second vehicle is moving through the volume of space.

In one embodiment, the control system may have a local data collection system deployed that may use machine learning to enable derivation-based learning outcomes. The controller may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the control system may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following claims, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments. Other embodiments will be apparent to one of ordinary skill in the art upon reviewing the above description. The scope of the subject matter should, therefore, be determined with reference to the appended claims, along with the full scope of equivalents to which such claims are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

A reference herein to a patent document or any other matter identified as prior art, is not to be taken as an admission that the document or other matter was known or that the information it contains was part of the common general knowledge as at the priority date of any of the claims.

## Claims

1. A method comprising:
examining image deviation data associated with one or more image tiles of a set of the image tiles used to form a larger set view of a volume of space;
determining whether the one or more image tiles of the set are due for revision to update the larger set view of the volume of space based on the image deviation data that is examined; and
one or more of (a) scheduling a first vehicle (102) to move through or by the volume of space with one or more sensors (112) to capture one or more updated image tiles or (b) identifying a second vehicle (102) that is moving through, by, or toward the volume of space with the one or more sensors (112) to capture the one or more updated image tiles responsive to determining that the one or more image tiles of the set are due for revision.

2. The method of claim 1, wherein the image deviation data include a difference between image data of a first image tile of the one or more image tiles and image data of a second image tile of the one or more image tiles.

3. The method of claim 1, wherein the image deviation data include a time difference between a first time at which a first image tile of the one or more image tiles was obtained and image data of a second image tile of the one or more image tiles was obtained.

4. The method of claim 1, wherein at least one of the one or more image tiles in the set is a combination of different sensor outputs.

5. The method of claim 1, wherein the larger set view of the image tiles includes two or more images, video frames, or data output from an optical sensor (112) that are stitched together to form the larger set view of the volume of space.

6. The method of claim 1, wherein the larger set view of the image tiles includes a three-dimensional image of the volume of space.

7. The method of claim 1, wherein determining whether the one or more image tiles of the set are due for revision includes determining whether a data content of a previously obtained image tile of the one or more image tiles differs from a data content of a more recently obtained image tile by more than a threshold content amount.

8. The method of claim 1, wherein determining whether the one or more image tiles of the set are due for revision includes determining whether a time period between (c) an earlier time when a data content of a previously obtained image tile of the one or more image tiles was obtained and (d) a later time when a data content of a more recently obtained image tile was obtained is longer than a threshold time period.

9. The method of claim 1, wherein the one or more of (a) scheduling the first vehicle (102) or (b) identifying the second vehicle (102) includes directing the first vehicle (102) or the second vehicle (102) to use an onboard sensor to sense data for updating at least one of the image tiles that is older than one or more others of the image tiles or that is associated with an increased frequency of prior changes.

10. The method of claim 1, wherein the one or more of (a) scheduling the first vehicle (102) or (b) identifying the second vehicle (102) includes directing the first vehicle (102) or the second vehicle (102) to use an onboard sensor of the one or more sensors (112) to sense partial data of a sampled part, but not all, of at least one of the image tiles, and further comprising:
examining the partial data of the at least one of the image tiles that is sensed by the onboard sensor to determine whether the partial data of the at least one of the image tiles indicates that the at least one of the image tiles has changed.

11. The method of claim 10, further comprising:
updating a timestamp of the at least one of the image tiles associated with the partial data responsive to determining that the at least one of the image tiles has not changed; or
directing the onboard sensor to obtain additional data of an entirety of the at least one of the image tiles responsive to determining that the at least one of the image tiles has changed.

12. The method of claim 11, further comprising:
one or more of (c) scheduling a third vehicle (102) to move through or by the volume of space with the one or more sensors (112) to capture the one or more updated image tiles or (d) identifying a fourth vehicle (102) that is moving through, by, or toward the volume of space with the one or more sensors (112) to capture the one or more updated image tiles responsive to determining that the at least one of the image tiles has changed by more than a threshold amount.

13. The method of claim 1, further comprising:
communicating the set of the image tiles to at least a third vehicle (102) for the at least the third vehicle (102) to control or change movement of the at least the third vehicle (102) while the at least the third vehicle (102) is moving through the volume of space.

14. A system (150) comprising:
one or more processors (132) configured to examine image deviation data associated with one or more image tiles of a set of the image tiles used to form a larger set view of a volume of space, the one or more processors (132) configured to determine whether the one or more image tiles of the set are due for revision to update the larger set view of the volume of space based on the image deviation data that is examined, the one or more processors (132) also configured to one or more of (a) schedule a first vehicle (102) to move through or by the volume of space with one or more sensors (112) to capture one or more updated image tiles or (b) identify a second vehicle (102) that is moving through, by, or toward the volume of space with the one or more sensors (112) to capture the one or more updated image tiles responsive to determining that the one or more image tiles of the set are due for revision.

15. The system (150) of claim 14, wherein the image deviation data include one or more of:
a difference between image data of a first image tile of the one or more image tiles and image data of a second image tile of the one or more image tiles; or
a time difference between a first time at which a first image tile of the one or more image tiles was obtained and image data of a second image tile of the one or more image tiles was obtained.
